# EUROPÄISCHE PATENTSCHRIFT

(11) **EP 0 742 374 B1**
(45) Veröffentlichungstag und Bekanntmachung des Hinweises auf die Patenterteilung: **20.10.1999**
(21) Anmeldenummer: 96810162.6
(22) Anmeldetag: 14.03.1996
(51) Int. Cl.: F16B 13/08

(54) **Befestigungselement mit Ankerbolzen und Spreizkeil**
Fixing device with an anchoring bolt and an expansion wedge
Elément de fixation comprenant un boulon d'ancrage et une câle d'expansion

(30) Priorität: 11.05.1995 DE 19517216
(43) Veröffentlichungstag der Anmeldung: 13.11.1996
(73) Patentinhaber: HILTI Aktiengesellschaft, 9494 Schaan (LI)
(72) Erfinder: Herb, Armin, 86974 Apfeldorf (DE); Forster, Hubert, 8-272 Moorenweis (DE)
(74) Vertreter: Wildi, Roland

(56) Entgegenhaltungen:
- EP-A- 0 283 720
- DE-U- 9 409 853
- US-A- 2 748 594

## Beschreibung

Die Erfindung betrifft ein Befestigungselement mit Ankerbolzen und Spreizkeil, wobei der Ankerbolzen an seinem in Setzrichtung vorderen Bereich eine sich keilförmig erweitemde Aussenkontur und eine Keilfläche aufweist, entlang welcher der Spreizkeil zur Verspreizung in Setzrichtung verschiebbar ist, und an seinem rückwärtigen Endbereich mit einem flanschartigen Angriffsteil zur Lastaufnahme versehen ist, das eine Durchgangsbohrung für den Spreizkeil aufweist, wobei der Spreizkeil im vormontierten Zustand unverlierbar am Ankerbolzen gehalten ist.

Befestigungselemente mit Ankerbolzen und Spreizkeil werden vor allem zum Befestigen von Zwischendecken, Verkleidungen, Gerüsten, Rohren, Leitungen und dergleichen eingesetzt. Da diese Befestigungselemente in grossen Stückzahlen Anwendung finden, wird daran insbesondere die Forderung gestellt, dass sie wirtschaftlich herstellbar sind und unter nur geringem Zeitaufwand und ohne spezielle Werkzeuge gesetzt werden können. Die Befestigungselemente sind derart aufgebaut, dass ein Teil als Ankerbolzen ausgebildet ist, welcher der Aufnahme der zu befestigenden, beispielsweise abzuhängenden, Last dient. Entlang einer am Ankerbolzen angeordneten Keilfläche lässt sich bei den bekannten Befestigungselementen ein Spreizkeil verschieben. Nach Erzeugen einer Verspreizung sitzt das Befestigungselement in einer vorbereiteten Aufnahmebohrung, beispielsweise in einer Decke fest. Erfolgt ein Kraftangriff an dem Ankerbolzen, beispielsweise durch eine abgehängte Last, so erfolgt zudem eine Nachspreizung des Befestigungselementes.

Aus der EP-A-0,283,720 ist ein Befestigungselement bekannt, welches aus einem Ankerbolzen und einem Spreizkeil besteht. Der Ankerbolzen besitzt eine Keilfläche, entlang welcher der Spreizkeil zum Verspreizen des Befestigungselements in Setzrichtung verschiebbar ist, und einen Angriffsflansch mit einer Durchgangsöffnung, in welcher der Spreizkeil geführt ist. Der Spreizkeil weist zwei Vorsprünge auf, die bei der Vormontage des Befestigungselementes, d. h. beim Zusammenfügen von Ankerbolzen und Spreizteil der Verklemmung des Spreizkeils gegenüber dem Ankerbolzen in der Durchgangsöffnung dienen. Die Vorsprünge überragen die Wandung der Durchgangsöffnung im Angriffsflansch wenigstens teilweise radial und erfahren bei der Vormontage des Spreizkeils im Rahmen der Verklemmung an dem Ankerbolzen eine geringfügige Verformung, wenn die Vorsprünge in Setzrichtung des Befestigungselementes mit der Wandung der Durchgangsbohrung des Angriffsflansches in Kontakt kommen. Dabei kann der Spreizkeil so abkippen, dass sein setzrichtungsseitiges Ende abhebt und die Aussenkontur des Ankerbolzens radial überragend vom Ankerbolzen absteht. Ein derartig vormontiertes Befestigungselement kann aufgrund des abgehobenen Spreizkeils oft nicht in eine vorbereitete Aufnahmebohrung eingesetzt werden, die auf den Durchmesser des Ankerbolzens abgestimmt ist. Nachteilig an diesem bekannten Befestigungselement ist auch, dass speziell bei der Montage in Aufnahmebohrungen an Decken ein selbsttätiges Halten des Befestigungselementes in der Aufnahmebohrung nicht gewährleistet ist. Der Anwender muss demnach bis zum Ende des Setzvorgangs darauf achten, dass das Befestigungselement richtig in der Aufnahmebohrung sitzt.

Zur Abhilfe dieser Nachteile ist in der EP-A-0 620 347 ein Befestigungselement mit Ankerbolzen und Spreizkeil vorgeschlagen, bei dem der Spreizkeil derart bogenförmig ausgebildet ist, dass er im ungespreizten Zustand nur im vorderen und im rückwärtigen Endbereich des Ankerbolzens anliegt. Bei der Vormontage wird der Spreizkeil dieses vorgeschlagenen Befestigungselements eintlang des Ankerbolzens verschoben. Dabei gleitet der setzrichtungseitige Bereich des Spreizkeiles wenigstens teilweise entlang der Keilfläche des Ankerbolzens. In dieser ungespreizten Position erfolgt eine Festlegung des Spreizkeiles gegenüber dem Ankerbolzen über den Flansch, wobei der setzrichtungsseitige Bereich des Spreizkeiles an der Keilfläche des Ankerbolzens anliegt. Beim Einsetzen dieses Befestigungselementes in eine Aufnahmebohrung, die auf den Durchmesser des Ankerbolzens abgestimmt ist, erfolgt eine Rückverformung des nach aussen gewölbten bogenförmigen Spreizkeiles. Dabei entsteht eine in radialer Richtung wirkende Vorspannkraft, durch die das Befestigungselement in der Aufnahmebohrung gehalten wird, was insbesondere die Überkopfmontage erleichtert. Während auf diese Weise den Nachteilen der bislang bekannten Befestigungselemente abgeholfen werden konnte, ist aber auch dieses Befestigungselement noch verbesserungsfähig.

Der Spreizkeil des verbesserten Befestigungselementes ist mit einem Bereich geringerer Wandstärke versehen, der beim Setzvorgang ein Nachrücken des hinteren Bereiches des Spreizkeiles in Setzrichtung ermöglicht, so dass das rückwärtige Ende des Spreizkeiles gegenüber dem flanschartigen Angriffsteil oberflächenbündig gesetzt werden kann. Bei hartem Beton sind die Spreizkräfte in der Aufnahmebohrung oft so hoch, dass der Spreizkeil beim Eintreiben an dem als Scherbereich ausgebildeten Bereich geringerer Wandstärke abgeschert wird. Die spezielle Gestaltung des Scherbereichs erlaubt dann ein weiteres Eintreiben des Spreizkeiles. Es kann nun vorkommen, dass der abgescherte rückwärtige Bereich des Spreizkeiles in der Aufnahmebohrung keinen richtigen Halt mehr findet und sogar durch die Durchtrittsbohrung herausfällt. Während dieser Umstand sich zwar nicht negativ auf die Halteeigenschaften des Befestigungselementes auswirkt, kann es beim Anwender doch zu Irritationen führen, wenn er feststellt, dass der für ihn sichtbare Teil des Spreizkeiles manchmal keinen festen Halt in der Aufnahmebohrung findet oder gar aus der Durchtrittsöffnung herausfällt.

Aufgabe der vorliegenden Erfindung ist es daher, ein gattungsgemässes Befestigungselement dahingehend zu verbessern, dass die vorstehend geschilderten Nachteile nicht auftreten. Es soll ein Befestigungselement geschaffen werden, bei dem ein sicherer Halt des gesamten Spreizkeiles selbst dann noch gewährleistet ist, wenn der Spreizkeil beim Setzvorgang abgeschert wird. Das gesetzte Befestigungselement soll dem Anwender keinen Anlass zu Irritationen liefern. Der sichere Halt des Befestigungselementes soll für den Anwender unmittelbar ersichtlich sein. Zudem soll das Befestigungselement einfach und kostengünstig herstellbar sein.

Die Lösung dieser Aufgaben besteht in einem Befestigungselement welches die im kennzeichnenden Abschnitt des Patentanspruches 1 aufgeführten Merkmale aufweist. Insbesondere wird durch die Erfindung ein Befestigungselement geschaffen, das einen Ankerbolzen und einen Spreizkeil umfasst. Der Ankerbolzen weist an seinem in Setzrichtung vorderen Bereich eine sich keilförmig erweitemde Aussenkontur und eine Keilfläche auf, entlang welcher der Spreizkeil zur Verspreizung in Setzrichtung verschiebbar ist. An seinem rückwärtigen Endbereich ist der Ankerbolzen mit einem flanschartigen Angriffsteil zur Lastaufnahme versehen, das eine Durchgangsbohrung für den Spreizkeil aufweist. Der Spreizkeil ist im vormontierten Zustand unverlierbar am Ankerbolzen gehalten. Die Aussenkontur eines das Angriffsteil überragenden rückwärtigen Bereiches des Spreizkeiles ist derart ausgebildet, dass der Spreizkeil im verspreizten Zustand mit Klemmsitz in der Durchgangsbohrung gehalten ist.

Durch die erfindungsgemässe Ausbildung des Befestigungselements ist gewährleistet, dass der Spreizkeil immer sicher in Position gehalten wird. Selbst wenn der Spreizkeil während des Setzvorganges beim Eintreiben in Setzrichtung am Scherbereich abgeschert wird, ist der mit seinem rückwärtigen Ende bündig mit dem flanschartigen Angriffsteil abschliessende Spreizkeil sicher in der Durchtrittsbohrung gehalten und kann nicht herausfallen. Für den Anwender ist unmittelbar ersichtlich, dass das Befestigungelement korrekt gesetzt worden ist, es gibt für ihn keinerlei Veranlassung mehr, an der Bekastbarkeit des gesetzten Befestigungspunktes zu zweifeln. Das erfindungsgemässe Befestigungselement ist einfach zu montieren und kostengünstig in seiner Herstellung.

Besonders einfach ist ein Klemmsitz des Spreizkeiles in der Durchgangsbohrung des Angriffsteiles zu erreichen, wenn die axiale Projektion des rückwärtigen Bereiches des Spreizkeiles wenigstens bereichsweise ausserhalb der Projektion der Durchgangsbohrung liegt. Zweckmässigerweise überragt dabei der ausserhalb der axialen Projektion der Durchgangsbohrung liegende Bereich des Spreizkeiles die Projektionskontur der Durchgangsbohrung um etwa 10 µm bis etwa 50 µm. Diese Überstände erweisen sich als vorteilhaft, das sie einerseits beim Eintreiben des Spreizkeiles zu keiner Selbsthemmung führen und andererseits einen ausreichenden Klemmsitz im verspreizten Zustand gewährleisten.

In einer Ausführungsvariante der Erfindung erweitert sich die Aussenkontur des Spreizkeiles zu seinem rückwärtigen Ende hin wenigstens in einer radialen Richtung kontinuierlich. Beim Eintreiben des Spreizkeiles wird die Durchgangsbohrung zwar geringfügig aufgeweitet. Die zum rückwärtigen Ende des Spreizkeiles kontinuierlich erweiterte radiale Aussenkontur sorgt aber für eine kontinuierlich erneuerte Klemmwirkung in der Durchgangsbohrung des Angriffsteiles und vergrössert diese sogar noch. Die Verbreiterung des Spreizkeiles kann dabei bereits in dem Bereich des Spreizkeiles erfolgen, der im vormontierten ungespreizten Zustand am rückwärtigen Ende des Ankerbolzens anliegt. Dieser verbreiterte Bereich wirkt dann als zusätzliche Herausfallsicherung des Spreizkeiles aus der Durchgangsbohrung im vormontierten Zustand des Befestigungselementes.

In einer besonders einfach herstellbaren Ausführungsvariante des erfindungsgemässen Befestigungselementes ist der rückwärtige Bereich des Spreizkörpers mit wenigstens einem radial abstehenden rückwärtigen Vorsprung versehen. In vorteihafter Weise sind zwei laschenartig ausgebildete hintere Vorsprünge vorgesehen, welche im wesentlichen an gegenüberliegenden Seiten eines grössten Durchmessers des rückwärtigen Bereiches des Spreizkeiles angeordnet sind. Diese können ganz einfach durch Anquetschen des Spreizkörpers hergestellt werden.

In einer vorteilhaften Ausführungsvariante des erfindungsgemässen Befestigungselementes weist der rückwärtige Bereich des Spreizkeiles wenigstens einen weiteren Vorsprung auf, der derart angeordnet ist, dass er im ungespreizten Zustand fest gegen die Wandung der Durchgangsbohrung anliegt. Bevorzugt sind zwei zusätzliche Vorsprünge vorgesehen, welche in der Axialprojektion des Spreizkeiles von den rückwärtigen Vorsprüngen überdeckt werden, wobei die rückwärtigen Vorsprünge die zusätzlichen Vorsprünge um etwa 10 µm bis etwa 25µm radial überragen. Die zusätzlichen laschenartigen Vorsprünge erfüllen die Funktion von zusätzlichen Herausfallsicherungen für den vormontierten Spreizkeil im ungespreizten Zustand des erfindungsgemässen Befestigungselementes.

In einer vorteilhaften Ausführungsvariante der Erfindung ist der Spreizkeil derart bogenförmig geformt, dass er im ungespreizten Zustand nur im vorderen und im rückwärtigen Endbereich des Ankerbolzens anliegt. Dadurch ist der Spreizkeil in der Durchgangsbohrung des flanschartigen Angriffsteils im vormontierten Zustand mit Klemmsitz gehalten, und ist sichergestellt, dass er sich bei der Lagerung und bei der Handhabung nicht vom Ankerbolzen löst. Die bogenförmige Ausbildung des Spreizkeiles hat zusätzlich den Vorteil, dass der Ankerbolzen und der Spreizkeil ein geringes Übermass gegenüber einer Durchgangsbohrung aufweisen. Bei einer Überkopfmontage ist dadurch das Befestigungselement vor einem Herausfallen aus der Aufnahmebohrung gesichert.

Im folgenden wird die Erfindung unter Bezugnahme auf in den Figuren dargestellte Ausführungsbeispiele näher erläutert. Es zeigen:
- Fig. 1: ein erstes Ausführungsbeispiel eines erfindungsgemässen Befestigungselementes;
- Fig. 2: das Befestigungselement aus Fig. 1 im ungespreizten Zustand in einer Aufnahmebohrung;
- Fig. 3: das Befestigungselement aus Fig. 1 und 2 im gespreizten Zustand;
- Fig. 4: ein zweites Ausführungsbeispiel eines erfindungsgemässen Befestigungselementes;
- Fig. 5: eine Aufsicht des Befestigungselementes gemäss Pfeil P in Fig. 4 in vergrössertem Massstab;
- Fig. 6: ein Spreizkeil des Befestigungselementes gemäss Fig. 4; und
- Fig. 7: ein weiteres Ausführungsbeispiel eines Spreizkeiles eines erfindungsgemässen Befestigungselementes.

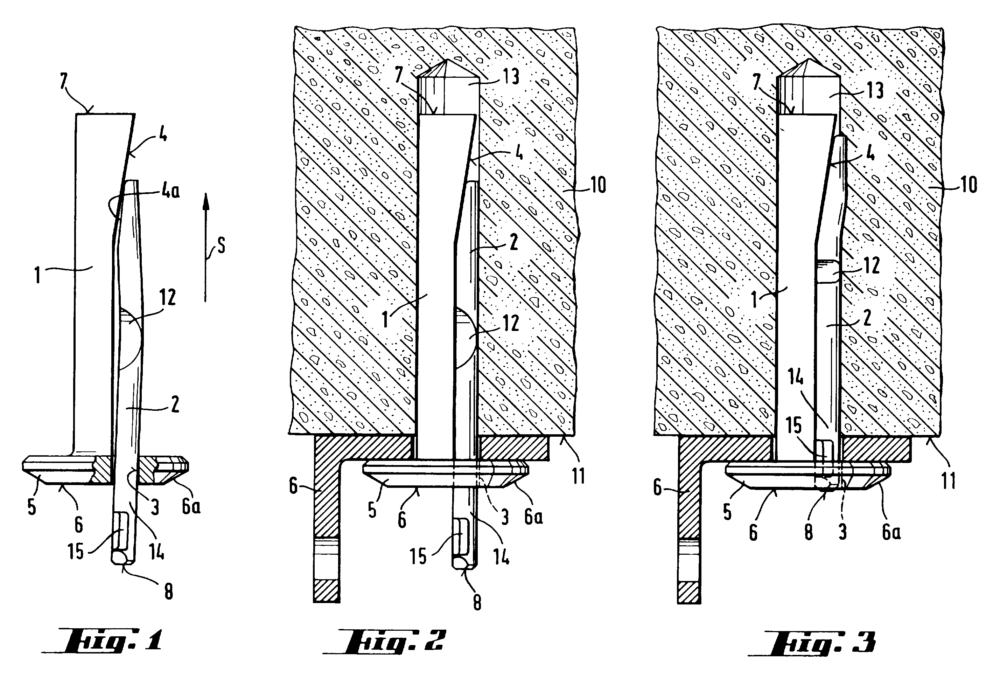

Das in Fig. 1, 2 und 3 dargestellte erste Ausführungsbeispiel eines erfindungsgemässen Befestigungselementes umfasst einen Ankerbolzen 1 und einen Spreizkeil 2. Der Ankerbolzen 1 weist in seinem der Setzrichtung S abgewandten rückwärtigen Endbereich 6 ein flanschartiges Angriffsteil 5 mit einer Durchgangsbohrung 3 auf, welche der Aufnahme und Führung des gegenüber dem Ankerbolzen 1 verschiebbaren Spreizkeils 2 dient. Der in Setzrichtung S vordere Bereich 7 des Ankerbolzens 1 besitzt eine sich zum vorderen Ende hin keilförmig erweitemde Aussenkontur und ist mit einer Keilfläche 4 versehen, entlang welcher der Spreizkeil 2 zur Verspreizung in Setzrichtung S verschiebbar ist. Der Spreizkeil 2 weist einen teilweise halbrund ausgebildeten Querschnitt auf und verjüngt sich zu seinem setzrichtungsseitigen vorderen Ende in einer zur Keilfläche 4 des Ankerbolzens 1 korrespondierenden Anlagefläche 4a. Der Spreizkeil 2 ist im vormontierten Zustand unverlierbar am Ankerbolzen 1 gehalten. In den dargestellten Ausführungsbeispielen ist er in Längsrichtung derart bogenförmig ausgebildet, dass er im ungespreizten Zustand nur am rückwärtigen Endbereich 6 und am vorderen Bereich 7 des Ankerbolzens 1 anliegt. Das grösste Spiel zwischen Ankerbolzen 1 und Spreizkeil 2 beträgt dabei bevorzugt etwa 0,2 mm bis etwa 1,5 mm. Fig. 1 zeigt das Befestigungselement im vormontierten Zustand. Der Spreizkeil 2 ragt durch die Durchgangsbohrung 3 im flanschartigen Angriffsteil 5 und ist dort mit Klemmsitz festgehalten.

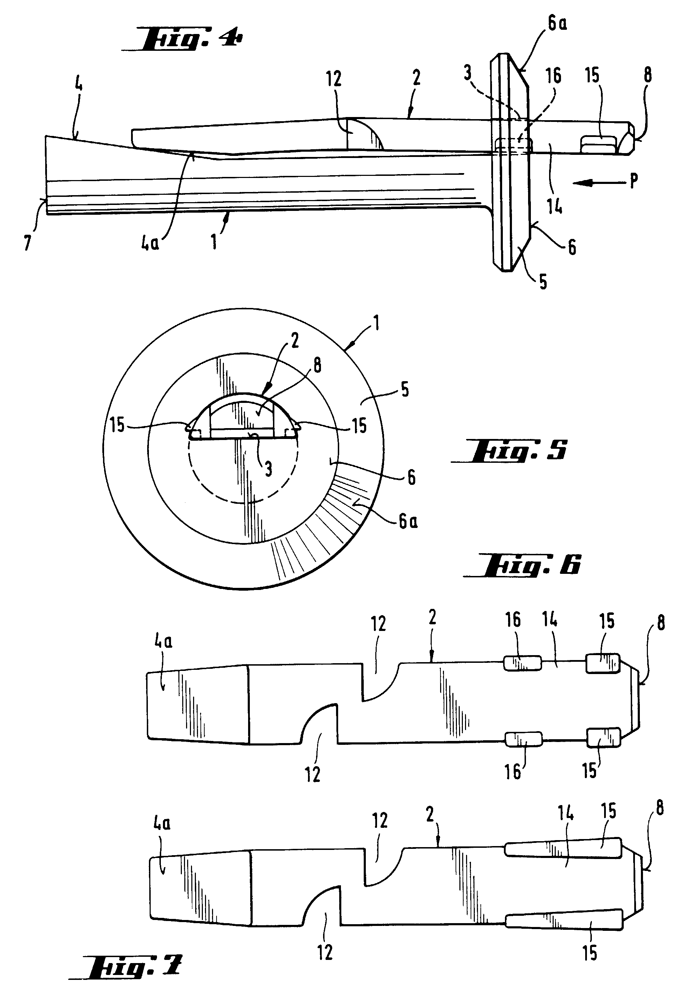

In Fig. 2 ist das vormontierte, ungespreizte Befestigungselement in einer vorbereiteten Aufnahmebohrung 13 eines Aufnahmewerkstoffes 10 dargestellt. Zwischen der setzrichtungsseitigen Fläche des flanschartigen Angriffsteiles 5 und der Oberfläche 11 des Aufnahmewerkstoffes 10 ist ein Bauteil 9 angedeutet. Die Aufnahmebohrung 13 besitzt einen Durchmesser, der im wesentlichen der Aussenkontur des Ankerbolzens 1 entspricht. Der bogenförmig ausgebildete Spreizkeil liegt unter Vorspannung an der Wandung der Aufnahmebohrung 13 an. Der Spreizkeil 2 ist derart gegen den Ankerbolzen 1 gepresst, dass nur ein sehr geringes bzw. gar kein Spiel dazwischen freibleibt. Durch die Vorspannung ist das Befestigungselement in der Aufnahmebohrung 13 gehalten und kann auch bei Überkopfmontage nicht aus der Aufnahmebohrung 13 herausfallen. Soweit entspricht das Befestigungselement dem aus der EP-A-0,620,374 bekannten Befestigungselement.

Erfindungsgemäss weist der Spreizkeil 2 des Befestigungselementes 1 an seinem das flanschartige Angriffsteil 5 überragenden rückwärtigen Bereich 14 radial abstehende Vorsprünge 15. Die rückwärtigen Vorsprünge 15 sind beispielsweise durch Anquetschen des Materials des Spreizkeiles 2 hergestellt und haben die Form von die seitliche Kontur des Spreizkeiles 2 überragenden Nasen. Insbesondere sind die Vorsprünge 15 derart ausgebildet, dass der Spreizkeil 2 im verspreizten Zustand mit Klemmsitz in der Durchgangsbohrung 3 gehalten ist, wie in Fig. 3 angedeutet ist. Das Verspreizen des Befestigungselementes in der Aufnahmebohrung 13 erfolgt beispielsweise unter Zuhilfenahme eines nicht dargestellten Schlagwerkzeuges in Form eines Hammers, mit dem auf das rückwärtige Ende 8 des Spreizkeiles 2 geschlagen wird, bis das rückwärtige Ende 8 gegenüber der Stimseite des flanschartigen Angriffsteiles 5 am rückwärtigen Ende 6 des Ankerbolzens 1 oberflächenbündig ausgerichtet ist. Um ein oberflächenbündiges Setzen zuverlässig zu ermöglichen, ist der Spreizkeil 2 mit einem Scherbereich 12 versehen, der beim Setzvorgang auch in festem Aufnahmematerial 10 ein Nachrücken des rückwärtigen Bereiches 14 des Spreizkeiles 2 in Setzrichtung ermöglicht. Die bündige Ausrichtung der rückwärtigen Schlagfläche 8 des Spreizkeiles 2 gegenüber dem als Schlagfläche ausgebildeten rückwärtigen Ende 8 des Ankerbolzens 1 ist ein Mass dafür, dass der Spreizvorgang des Befestigungselementes korrekt ausgeführt worden ist. Bei der Vorwärtsbewegung des Spreizkeiles 2 werden die Vorsprünge 15 in die Durchtrittsbohrung 3 im flanschartigen Angriffsteil 5 eingetrieben und dort im Klemmsitz gehalten. Auf diese Weise ist auch im Falle eines Abscherens des Spreizkeiles 2 am Scherbereich 12 der rückwärtige Teil des Spreizkeiles 2 festgehalten und kann nicht durch die Durchgangsbohrung 3 herausfallen. Durch das Angreifen einer Last am Bauteil 9 wird eine Nachspreizung des Befestigungselementes erreicht.

Das in Fig. 4 dargestellte Ausführungsbeispiel des erfindungsgemässen Befestigungselementes ist gegenüber dem anhand der Fig. 1 - 3 erläuterten geringfügig modifiziert. Die Bezugszeichen in Fig. 4 bezeichnen dabei jeweils gleiche Bauteile und Elemente wie in den Darstellungen in Fig. 1 - 3. Bei dieser vorteilhaften Ausführungsvariante sind am rückwärtigen Bereich 14 des Spreizkeiles 2 zusätzlich zu den rückwärtigen Vorsprüngen 15 noch zwei weitere Vorsprünge 16 vorgesehen, die bereits im vormontierten Zustand des Befestigungselementes in der Durchgangsbohrung 3 mit Klemmsitz gehalten werden. Die zusätzlichen Vorsprünge 16 sind wie die rückwärtigen Vorsprünge 15 im wesentlichen an gegenüberliegenden Seiten eines grössten Durchmessers des Spreizkeiles 2 angeordnet, wie Fig. 6 zeigt. Dabei überragen die rückwärtigen Vorsprünge 15 die zusätzlichen Vorsprünge 16 radial um etwa 10 µm bis etwa 25µm. Auf diese Weise ist gewährleistet, dass die rückwärtigen Vorsprünge 15 in der bereits von den zusätzlichen Vorsprüngen 16 aufgeweiteten Durchgangsbohrung 3 mit Klemmsitz gehalten werden.

Fig. 7 zeigt eine weitere Variante eines Spreizkeiles 2 eines erfindungsgemässen Befestigungselementes. Der rückwärtige Bereich 14 des Spreizkeiles 2 ist in diesem Fall mit zwei Vorsprüngen 15 versehen, die sich zum rückwärtigen Ende 8 des Spreizkeiles 2 hin kontinuierlich radial verbreitern. Die Längserstreckung der Vorsprünge 15 ist dabei derart bemessen, dass die Vorsprünge 15 im vormontierten Zustand des Befestigungselementes bereits in der Durchgangsbohrung 3 festgeklemmt sind. Beim Setzvorgang wird der Spreizkeil 2 durch die Durchgangsbohrung 3 in Setzrichtung vorgetrieben. Dabei wird die Durchtrittsöffnung 3 aufgeweitet, aber gleichzeitig die Klemmwirkung durch die sich zum rückwärtigen Ende 8 radial erweiternden Vorsprünge 15 kontinuierlich erneuert und sogar vergrössert.

Die zusätzlichen Vorsprünge 16 des in Fig. 6 dargestellten Spreizkeiles 2 und die Längserstreckung der rückwärtigen Vorsprünge 15 des Spreizkeiles 2 aus Fig. 7 erfüllen die Funktion von zusätzlichen Herausfallsicherungen für den Spreizkeil 2 im vormontierten Zustand des erfindungsgemässen Befestigungselementes. In Fig. 4, 6 und 7 ist am setzrichtungsseitigen vorderen Ende des Spreizkeiles 2 jeweils die keilförmige Anlagefläche 4a dargestellt. Deutlich ersichtlich ist der nach hinten anschliessende Scherbereich 12 am Spreizkeil.

Fig. 5 zeigt eine Aufsicht des erfindungsgemässen Befestigungselementes gemäss Pfeil P in Fig. 4. Der Spreizkeil 2 des Befestigungselementes kann dabei gemäss Fig. 1 - 3, Fig. 6 oder 7 ausgebildet sein. Es ist deutlich ersichtlich, dass der die Vorsprünge 15 am rückwärtigen Bereiches 14 des Spreizkeiles 2 ausserhalb der Projektion der Durchgangsbohrung 3 liegen. Insbesondere überragen die Vorsprünge 15 die Projektionskontur der Durchgangsbohrung 3 um etwa 10 µm bis etwa 50 µm, Im Falle eines Spreizkeiles 2 gemäss Fig. 4 und 6 werden die radial weniger weit vorstehenden zusätzlichen Vorsprünge 16 von den hinteren Vorsprüngen 15 überdeckt.

Das erfindungsgemässe Befestigungselement ist am Beispiel von Spreizkeilen 2 mit einander gegenüberliegenden Vorsprüngen 15, 16 erläutert worden. Es versteht sich, dass der Spreizkeil 2 auch einzeln angeordnete Vorsprünge 15, 16 aufweisen kann. Varianten, bei der Spreizkeil 2 keine Vorsprünge aufweist sondern einen rückwärtigen Bereich 14, dessen Kontur zum rückwärtigen Ende 8 hin gesamthaft erweitert ausgebildet ist, sind vom Erfindungsgedanken mit umfasst.

In den Fig. 1 - 5 ist am flanschartigen Angriffsteil 5 an der von der Setzrichtung abgewandten Seite eine abgefaste Ringfläche 6a dargestellt. Diese schliesst unmittelbar an den als Schlagfläche 6 ausgebildeten Endbereich des Ankerbolzens 1 an. Die abgefaste Ringfläche 6a hat den Vorteil, dass sie beim Eintreiben des Spreizkeiles 2 nicht mit dem Schlagwerkzeug, beispielsweise mit einem Hammer, beaufschlagt wird. Die Ringfläche 6a kann daher für das Anbringen einer Beschriftung verwendet werden, die auch nach dem Setzvorgang noch für den Anwender leserlich bleibt. Dieser kann somit am gesetzten Befestigungselement sehr einfach erkennen und kontrollieren, welche Art von Befestigungselement einen Befestigungspunkt bildet.

Durch die erfindungsgemässe Ausbildung des Befestigungselements ist gewährleistet, dass der Spreizkeil immer sicher in Position gehalten wird. Selbst wenn der Spreizkeil während des Setzvorganges beim Eintreiben in Setzrichtung am Scherbereich abgeschert wird, ist der mit seinem rückwärtigen Ende bündig mit dem flanschartigen Angriffsteil abschliessende Spreizkeil sicher in der Durchtrittsbohrung gehalten und kann nicht herausfallen. Für den Anwender ist unmittelbar ersichtlich, dass das Befestigungelement korrekt gesetzt worden ist, es gibt für ihn keinerlei Veranlassung mehr, an der Belastbarkeit des gesetzten Befestigungspunktes zu zweifeln. Der Vorteil der einfachen Vormontage bleibt erhalten, wobei sichergestellt ist, dass das vormontierte Befestigungselement nicht wieder auseinanderfallen kann. Bei einem besonders vorteilhaften Ausführungsbeispiel der Erfindung bleibt auch der Vorteil der Vorspannung beim Setzen des Befestigungselementes in eine vorbereitete Aufnahmebohrung erhalten, so dass ein selbsttätiges Halten des eingesteckten aber noch nicht verspreizten Befestigungselements auch in Aufnahmebohrungen an der Decke bei Überkopfmontage gewährleistet ist. Das erfindungsgemässe Befestigungselement ist einfach zu montieren und kostengünstig in seiner Herstellung.

## Patentansprüche

1. Befestigungselement mit Ankerbolzen (1) und Spreizkeil (2), wobei der Ankerbolzen (1) an seinem in Setzrichtung (S) vorderen Bereich (7) eine sich keilförmig erweiternde Aussenkontur und eine Keilfläche (4) aufweist, entlang welcher der Spreizkeil (2) zur Verspreizung in Setzrichtung (S) verschiebbar ist, und an seinem rückwärtigen Endbereich (6) mit einem flanschartigen Angriffsteil (5) zur Lastaufnahme versehen ist, das eine Durchgangsbohrung (3) für den Spreizkeil (2) aufweist, wobei der Spreizkeil (2) im vormontierten Zustand unverlierbar am Ankerbolzen (1) gehalten ist, **dadurch gekennzeichnet**, dass die Aussenkontur eines das flanschartige Angriffsteil (5) im vormontierten Zustand überragenden rückwärtigen Bereiches (14) des Spreizkeils (2) derart ausgebildet ist, dass der Spreizkeil (2) im verspreizten Zustand mit Klemmsitz in der Durchgangsbohrung (3) gehalten ist.

2. Vorrichtung nach Anspruch 1, dadurch gekennzeichnet, dass die axiale Projektion des rückwärtigen Bereiches (14) des Spreizkeiles (2) wenigstens bereichsweise ausserhalb der Projektion der Durchgangsbohrung (3) liegt.

3. Vorrichtung nach Anspruch 2, dadurch gekennzeichnet, dass der ausserhalb der axialen Projektion der Durchgangsbohrung liegende Bereich des Spreizkeiles (2) die Projektionskontur der Durchgangsbohrung (3) um etwa 10 µm bis etwa 50 µm überragt.

4. Vorrichtung nach einem der vorangehenden Ansprüche, dadurch gekennzeichnet, dass sich die Aussenkontur des Spreizkeiles (2) zu seinem rückwärtigen Ende (8) hin wenigstens in einer radialen Richtung kontinuierlich erweitert.

5. Vorrichtung nach einem der Ansprüche 1 - 4, dadurch gekennzeichnet, dass der rückwärtige Bereich des Spreizkörpers (14) mit wenigstens einem radial abstehenden rückwärtigen Vorsprung (15) versehen ist.

6. Vorrichtung nach Anspruch 5, dadurch gekennzeichnet, dass zwei laschenartig ausgebildete rückwärtige Vorsprünge (15) vorgesehen sind, welche im wesentlichen an gegenüberliegenden Seiten eines grössten Durchmessers des rückwärtigen Bereiches (14) des Spreizkeiles (2) angeordnet sind.

7. Vorrichtung nach Anspruch 5 oder 6, dadurch gekennzeichnet, dass der rückwärtige Bereich (14) des Spreizkeiles (2) wenigstens einen weiteren Vorsprung (16) aufweist, der derart angeordnet ist, dass er im vormontierten, ungespreizten Zustand fest gegen die Wandung der Durchgangsbohrung (3) anliegt.

8. Vorrichtung nach Anspruch 7, dadurch gekennzeichnet, dass zwei weitere Vorsprünge (16) vorgesehen sind, welche in der Axialprojektion des Spreizkeiles (2) von den rückwärtigen Vorsprüngen (15) überdeckt werden, wobei die rückwärtigen Vorsprünge (15) die weiteren Vorsprünge (16) um etwa 10 µm bis etwa 25µm radial überragen.

9. Vorrichtung nach einem der vorangehenden Ansprüche, dadurch gekennzeichnet, dass der Spreizkeil (2) derart gebogen ausgebildet ist, dass er im ungespreizten Zustand nur im vorderen (7) und im rückwärtigen Endbereich (6) des Ankerbolzens (1) anliegt.

## Claims

1. Fixing element with anchor pin (1) and expanding wedge (2), and the anchor pin (1) has in its front area (7), as seen in the setting direction (S), a wedgelike expanding external contour and a wedge surface (4) along which expanding wedge (2) is displaceable for the purpose of expanding in the setting direction (S), and it is at its rear end (6) provided with a flangelike engagement part (5) of receiving a load, comprising a throughbore (3) for the expanding wedge (2), and the expanding wedge (2) is in its pre-assembled state held on the anchor bolt (1) so that it cannot be lost, **characterised in that** the external contour of a rearward area (14) of the expanding wedge (2), which in its pre-assembled state protrudes over the flangelike engagement part (5), is configured in such a manner that the expanding wedge (2) is in its expanded state held in the throughbore (3) in a clamping seat.

2. Device according to Claim 1, **characterised in that** the axial projection of the rearward area (14) of the expanding wedge (2) lies at least in some areas outside the projection of the throughbore (3).

3. Device according to Claim 2, **characterised in that** the area of the expanding wedge (2) lying outside the axial projection of the throughbore projects over the projection contour of the throughbore (3) by approximately between 10 µm and 50 µm.

4. Device according to one of the above claims, **characterised in that** the external contour of the expanding wedge (2) continuously expands towards its rear end (8) at least in a radial direction.

5. Device according to one of Claims 1 to 4, **characterised in that** the rearward area of the expanding body (14) is provided with at least one radially protruding rearward protrusion (15).

6. Device according to Claim 5, **characterised in that** two rearward protrusions (15) of tonguelike design are provided which are essentially configured on opposite sides of a largest diameter of the rearward area (14) of the expanding wedge (2).

7. Device according to Claim 5 or 6, **characterised in that** the rearward area (14) of the expanding wedge (2) comprises at least one further protrusion (16) which is arranged in such a manner that it abuts in a pre-assembled not expanded state firmly against the wall of the throughbore (3).

8. Device according to Claim 7, **characterised in that** two further protrusions (16) are provided which are covered in the axial projection of the expanding wedge (2) by the rearward protrusions (15), and the rearward protrusions (15) protrude over the additional protrusions (16) by approximately between 10 µm and 25 µm.

9. Device according to one of the above claims, **characterised in that** the expanding wedge (2) is curved in such a manner that it abuts in its not expanded state only the front (7) and the rearward end area (6) of the anchor pin (1).

## Revendications

1. Élément de fixation avec goujon d'ancrage (1) et clavette d'expansion (2), le goujon d'ancrage (1) comportant, dans sa zone (7) située à l'avant dans le sens d'enfoncement (S), un contour extérieur s'élargissant en forme de coin et une surface inclinée (4) le long de laquelle la clavette d'expansion (2) peut coulisser dans le sens d'enfoncement pour réaliser l'expansion, et étant muni, dans sa zone arrière extrême (6), d'une partie d'attaque en forme de collerette (5) qui est destinée à recevoir des charges et qui est pourvue d'un trou débouchant (3) pour la clavette d'expansion (2), la clavette d'expansion (2) étant retenue, en position prémontée, sans risque de perte sur le goujon d'ancrage (1), caractérisé en ce que le contour extérieur de la zone arrière (14) de la clavette d'expansion (2) dépassant en position prémontée de la partie portante en forme de collerette (5) est conçu de façon que, en position d'expansion, la clavette d'expansion (2) soit maintenue par ajustement serré dans le trou débouchant (3).

2. Dispositif selon la revendication 1, caractérisé en ce que la projection axiale de la zone arrière (14) de la clavette d'expansion (2) se trouve au moins par endroits à l'extérieur de la projection du trou débouchant (3).

3. Dispositif selon la revendication 2, caractérisé en ce que la zone de la clavette d'expansion (2) située à l'extérieur de la projection axiale du trou débouchant dépasse du contour en projection du trou débouchant (3) d'environ 10 µm à environ 50 µm.

4. Dispositif selon une des revendications précédentes, caractérisé en ce que, au moins dans la direction radiale, le contour extérieur de la clavette d'expansion (2) s'élargit de manière continue en direction de l'extrémité arrière (8) de celle-ci.

5. Dispositif selon l'une des revendications 1 à 4, caractérisé en ce que la zone arrière du corps d'expansion (14) est munie d'au moins une saillie arrière (15) dépassant radialement.

6. Dispositif selon la revendication 5, caractérisé en ce qu'il est prévu deux saillies arrière en forme de pattes (15) qui sont disposées approximativement sur les côtés opposés du plus grand diamètre de la zone arrière (14) de la clavette d'expansion (2).

7. Dispositif selon la revendication 5 ou 6, caractérisé en ce que la zone arrière (14) de la clavette d'expansion (2) comporte au moins une saillie supplémentaire (16) qui est disposée de façon à être appliquée fermement, en position prémontée de non-expansion, contre la paroi du trou débouchant (3).

8. Dispositif selon la revendication 7, caractérisé en ce qu'il est prévu deux saillies supplémentaires(16) qui sont recouvertes par les saillies arrière (15) dans la projection axiale de la clavette d'expansion (2), les saillies arrière (15) dépassant radialement des saillies supplémentaires (16) d'environ 10 µm à environ 25 µm.

9. Dispositif selon une des revendications précédentes, caractérisé en ce que la clavette d'expansion (2) est cintrée de façon à ne toucher le goujon d'ancrage (1) que dans ses zones extrêmes avant (7) et arrière (6) en position de non-expansion.
